(19) Europäisches Patentamt
European Patent Office
Office européen des brevets

(11) EP 2 458 186 B1

(12) **EUROPEAN PATENT SPECIFICATION**

(45) Date of publication and mention of the grant of the patent:
**16.08.2017 Bulletin 2017/33**

(51) Int Cl.:
***F02D 41/04*** *(2006.01)* ***F02D 41/40*** *(2006.01)*

(21) Application number: **11191083.2**

(22) Date of filing: **29.11.2011**

(54) **Fuel injection control apparatus for internal combustion engine**

Vorrichtung zur Steuerung der Kraftstoffeinspritzung für einen Verbrennungsmotor

Appareil de contrôle d’injection de carburant pour moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 JP 2010265892**

(43) Date of publication of application:
**30.05.2012 Bulletin 2012/22**

(73) Proprietor: **Hitachi Automotive Systems, Ltd.**
**Hitachinaka-shi**
**Ibaraki**
**312-8503 (JP)**

(72) Inventors:
- **Okamoto, Takashi**
  **Ibaraki, 312-8503 (JP)**
- **Matsumura, Tetsuo**
  **Ibaraki, 312-8503 (JP)**
- **Arihara, Yoshinobu**
  **Ibaraki, 312-8503 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:

| | |
|---|---|
| **EP-A2- 0 943 793** | **EP-A2- 1 035 314** |
| **EP-A2- 1 247 970** | **EP-A2- 1 770 269** |
| **DE-A1- 10 242 226** | **DE-A1- 19 931 823** |
| **JP-A- 2009 191 768** | **US-A1- 2004 040 534** |
| **US-A1- 2008 245 342** | **US-B1- 6 491 018** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 458 186 B1

## Description

BACKGROUND OF THE INVENTION

Field of the Invention

The present invention relates to a control apparatus for an internal combustion engine mounted on a vehicle or the like and, more particularly, to a control apparatus for an in-cylinder injection internal combustion engine.

Background Art

Presently, from the viewpoint of environmental preservation, there is a demand for reducing exhaust gas materials, such as carbon monoxide (CO), hydrocarbon (HC) and nitrogen oxide (NOx), contained in exhaust gas from vehicles (motor vehicles) and reducing fuel consumption in vehicles. For the purpose of reducing these things, the development of in-cylinder injection internal combustion engines is being pursued. In in-cylinder injection internal combustion engines, fuel injection with a fuel injection valve is directly made in a combustion chamber in each cylinder. In-cylinder injection internal combustion engines can be designed so as to reduce exhaust gas materials, reduce fuel consumption and increase the engine output.

In in-cylinder injection internal combustion engines, fuel spray moving in each combustion chamber may attach to a crown surface of a piston and a cylinder bore wall surface, depending on fuel injection methods.

If the amount of fuel attached and remained to the piston crown surface and the cylinder bore wall surface is large, the number of discharged particles (PN) of materials in particle form, i.e., particulate matters (PM), and the amount of oil dilution due to dissolution of fuel in engine oil are increased. In particular, if the amount of fuel attached to the piston crown surface is increased, the number of discharged PM particles tends to increase.

JP Patent Publication (Kokai) No. 2009-191768A discloses a fuel injection controller that controls injection of fuel performed by dividing one injection to be made in one cycle into a plurality of injections to be made at different times, and a technique to correct the amount of fuel with respect to the last injection or the last and the second last injections in the divided fuel injections in one cycle.

In DE 1993 1823 A1, method of determining fuel injection drive control values for an internal combustion engine, in which injection is divided into at least a first injection phase and a second injection phase is described. For a three-phase system having preliminary, main and further injections, drive control durations for an electrically actuable valve are determined starting from a quantity of fuel to be injected in each phase. Correction values for the correction of the drive control durations are then determined.

In EP 1035314 A2, a method of controlling combustion of a direct-injection diesel engine by performing multiple injections by means of a common-rail injection system is described. It is thereby an object to provide a combustion control method for reducing the pollutant emissions and combustion noise, while at the same time improving the efficiency, performance and fuel consumption of diesel engine.

In DE10242226 A1, a method involves a homogeneous engine operating mode in which the fuel injection is arranged so that first and second sub-quantities are introduced in an induction stroke, a third is introduced during a compression stroke and ignition occurs between 0 and 100 degrees crankshaft angle after the end of introduction of the third sub-quantity.

In EP 0 943 793 A2, a control for a direct fuel injection spark ignition internal combustion engine is described. There is provided a stoichiometric combustion mode, where the fuel injection system can conduct a direct cylinder injection on the compression stroke to produce a relatively rich stratified air fuel mixture closely around a spark plug and a background of a relatively lean air fuel mixture produced homogenously over the combustion chamber by a direct cylinder injection on the intake stroke or a port or passage injection on or before the intake stroke.

In US 2004/040534 A1, an internal combustion engine is described where the fuel is injected directly into a combustion chamber with at least one injection per work cycle. Further, it is described that the fuel injection may include a plurality of short injection impulses spaced in time from each other.

SUMMARY OF THE INVENTION

Various division-injection techniques devised to improve the performance of in-cylinder injection internal combustion engines have been proposed. There is a drive scene in which even at the time of performing divided fuel injections during fuel injection air-fuel ratio control for constantly maintaining the proportion of oxygen in exhaust or during accelerating or decelerating operation, a change in the amount of fuel (an increase or a reduction in the amount of fuel injection) is required in addition to the basic amount of fuel determined from operating conditions including the engine speed and a required torque. No studies have been made as to how the entire amount of fuel including a change in the amount of fuel injection (a change in the amount of fuel) should be distributed with respect to injection pulses for divided injections in such a drive scene in which a change in the amount of fuel is required, and as to the relationship between this distribution and discharge of PMs.

The present invention has been made in view of this problem, and includes means for distributing a change in the amount of fuel based on injection times at which a plurality of divided fuel injections made per cycle.

A change in the amount of fuel is an increase in the amount of fuel injection or a reduction in the amount of fuel injection. An increase in the amount of fuel is defined as a positive value, and a reduction in the amount of fuel is defined as a negative value.

This means distributes a change in the amount of fuel based on injection times at which divided injections are made, and therefore enables control for satisfying a demand for an amount of fuel with respect to the total injection in one cycle while suitably increasing or reducing changes in the amount of fuel by means of injection pulses at injection times having high correlation with the occurrence of PMs.

Further, if this means is used, the change in the amount of fuel in a fuel injection made with an injection pulse width at an injection time at a most advanced angle in an intake stroke period or at a most retarded angle in a compression stroke period in a plurality of fuel injections can be set smallest in comparison with the changes in the amounts of fuel at the other injection times in the stroke period. At the injection time at the most advanced angle in the intake stroke period or at the most retarded angle in the compression stroke period, the distance between a fuel injection valve and a piston is short and fuel injected from the fuel injection valve at this time can attach easily to a crown surface of the piston. Therefore the attachment of fuel to the crown surface of the piston can be limited by controlling fuel injection in such a way as to minimize increase of the fuel injection pulse width at this time.

Also, if this means is used, the change in the amount of fuel in the fuel injection at the latest injection time can be set smallest. A case is conceivable in which with respect to fuel injected by the injection at the latest injection time in the plurality of divided injections, the time before ignition is short and the evaporation time is not sufficiently long. Therefore the attachment of fuel to the crown surface of the piston can be limited by controlling fuel injection in such a way as to avoid increasing the injection pulse width at the latest injection time.

Further, when the change in the amount of fuel exceeds a threshold value or is lower than the threshold value, for example, when a demand occurs for increasing or reducing the amount of fuel beyond the pulse widths for the divided injections, the number of divided injections itself is increased or reduced to achieve a preferable effect.

Also, selection is made, according to the operating states, from setting smallest the change in the amount of fuel in the fuel injection made with an injection pulse width at the injection time at the most advanced angle in the intake stroke period or at the most retarded angle in the compression stroke period in the plurality of fuel injections in comparison with the changes in the amounts of fuel at the other injection times in the stroke period, and setting smallest the change in the amount of fuel in the fuel injection at the latest fuel injection time. In some case, there is a difference between the amount of discharged PMs due to attachment of fuel to the piston and the amount of discharged PMs due to insufficiency of evaporation time, depending on the operating states. In such a case, fuel injection is controlled by the means more effective in reducing the amount of discharged PMs.

The operating states can be represented by at least one of a water temperature, an engine speed, a sum of the injection periods in one cycle, and a demanded amount of injection.

In a case where a change in the amount of fuel is an increase, there is a possibility of an adjacent pair of the divided injections joining to each other as a result of expansion of the fuel injection pulse widths for the divided injections to impair the adequate effects of divisional injection. To solve such a problem, injection times are determined such that each of the intervals between the divided injections is equal to or larger than a predetermined value.

According to the present invention, there can be provided a fuel injection control apparatus for an in-cylinder injection internal combustion engine that limits increases in the amount of discharged PMs.

## BRIEF DESCRIPTION OF THE DRAWINGS

FIG. 1 is a diagram schematically showing the configuration of the whole of a control system for an in-cylinder injection internal combustion engine according to an embodiment of the present invention.

FIG. 2 is a diagram schematically showing the configuration of the whole of a fuel system for the in-cylinder injection internal combustion engine according to the embodiment of the present invention.

FIG. 3 is a block diagram showing the relationship between input and output signals of an engine control unit used in the system configuration representing an example of a control apparatus for the in-cylinder injection internal combustion engine according to the embodiment of the present invention.

FIG. 4 is a diagram showing the relationship between lapses of time after a start of energization of an injector and the reach of injected fuel (penetration) in the fuel system for the in-cylinder injection internal combustion engine according to the embodiment of the present invention.

FIG. 5 is a diagram showing the relationship between the injection pulse width of the injector and the maximum value of the penetration of injected fuel in the fuel system for the in-cylinder injection internal combustion engine according to the embodiment of the present invention.

FIG. 6 is a diagram relating to a case where an injector that injects fuel in one direction is used, and showing the shortest distance from an injection orifice of the injector when the injector injects fuel into the combustion chamber while the piston moves from the top dead center to the bottom dead center.

FIG. 7 is a diagram relating to a case where a multihole injector that injects fuel in a plurality of directions is used, and showing the shortest distance from an injection orifice of the injector when the injector injects fuel into the combustion chamber while the piston moves from the top dead center to the bottom dead center.

FIG. 8 is a block diagram for control according to the present invention with the control apparatus for the internal combustion engine shown in FIG. 1.

FIG. 9 is a diagram showing parameters for divisional injection settings with the control apparatus for the internal combustion engine shown in FIG. 1.

FIG. 10 is a flowchart for control according to the present invention with the control apparatus for the internal combustion engine shown in FIG. 1.

FIG. 11 is a block diagram for control according to the present invention with the control apparatus for the internal combustion engine shown in FIG. 1.

FIG. 12 is a block diagram for control according to the present invention with the control apparatus for the internal combustion engine shown in FIG. 1.

FIG. 13 is a flowchart for control according to the present invention with the control apparatus for the internal combustion engine shown in FIG. 1.

FIG. 14 is a diagram for explaining an example of the effects of the present invention with the control apparatus for the internal combustion engine shown in FIG. 1.

## DETAILED DESCRIPTION OF THE PREFERRED EMBODIMENT

An embodiment of a fuel injection control apparatus in an internal combustion engine according to the present invention will be described with reference to the drawings. The configuration of the whole of a control system for an in-cylinder injection engine 1 according to the embodiment of the present invention will first be outlined with reference to FIG. 1.

FIG. 1 is a diagram schematically showing the configuration of the whole of the control system for the in-cylinder injection engine 1 forming an embodiment of the present invention. The in-cylinder injection engine 1 has four cylinders. However, only one cylinder is shown in the figure for ease of understanding. Air introduced into a cylinder 207b is taken in through an inlet portion of an air cleaner 202, passes an airflow meter (airflow sensor 203), passes through a throttle body 205 in which an electrically controlled throttle 205a for controlling an intake air flow rate is housed, and enters a collector 206. Air drawn in the collector 206 is distributed and introduced into an intake pipe 201 connected to the cylinder 207b of the in-cylinder injection engine 1 and led to a combustion chamber 207c formed with a piston 207a, the cylinder 207b and other parts. From the airflow sensor 203, a signal representing the intake air flow rate is output and supplied to an engine control unit 101 having a fuel injection control apparatus of the embodiment. A throttle sensor 204 for detecting the degree of opening of the electrically controlled throttle 205a is mounted on the throttle body 205. A signal from the throttle sensor 204 is also output to the engine control unit 101.

Fuel such as gasoline from a fuel tank 250 is primarily pressurized by a low-pressure fuel pump 251 and the pressure to which the fuel is thereby pressurized is regulated and maintained at a constant pressure (e.g., 0.3 MPa) by a fuel pressure regulator 252. The fuel is secondarily pressurized to a higher pressure (e.g., 5 to 10 MPa) by a high-pressure fuel pump 209 described below. The high-pressure fuel pump 209 is driven by a pump drive cam 200 synchronized with the rotation of the in-cylinder injection internal combustion engine. The fuel is thereafter injected into the combustion chamber 207c through a fuel injection valve (hereinafter referred to as injector 254) provided in the cylinder 207b via a pressure accumulation chamber (hereinafter referred to as common rail 253). A fuel pressure sensor 256 for detecting the pressure of fuel in the common rail 253 is provided.

The fuel injected into the combustion chamber 207c is ignited at an ignition plug 208 by an ignition signal boosted to a high voltage by an ignition coil 222. In the present embodiment, the injector 254 is of a side injection type and injects fuel from the cylinder 207b side of the in-cylinder injection engine 1. However, the injector 254 may alternatively be of a center injection type and inject fuel into the combustion chamber 207c from right above.

A water temperature sensor 217 for sensing the temperature of cooling water for cooling the in-cylinder injection internal combustion engine is provided on a side wall of the cylinder 207b.

A crank angle sensor 216 mounted on a crank shaft 207d of the in-cylinder injection engine 1 outputs a signal representing the rotational position of the crank shaft 207d to the engine control unit 101. A mechanism that enables variable opening/closing of an intake valve 225 and a mechanism that enables variable opening/closing of an exhaust valve 226 are provided. A cam angle sensor 211 mounted on a cam shaft (not shown) provided with the mechanism for variable opening/closing of the exhaust valve 226 outputs an angle signal representing the rotational position of the cam shaft to the engine control unit 101 and also outputs to the engine control unit 101 an angle signal representing the rotational position of the pump drive cam 200 of the high-pressure fuel pump 209 that rotates with the rotation of the cam shaft for the exhaust valve 226.

FIG. 2 schematically shows the entire configuration of the fuel system including the high-pressure fuel pump 209.

The high-pressure fuel pump 209 pressurizes fuel from the fuel tank 250 and feeds the fuel at a high pressure to the common rail 253.

The fuel is led from the tank 250 to a fuel inlet of the high-pressure fuel pump 209 by the low-pressure fuel pump 251 while being regulated at a constant pressure by the fuel pressure regulator 252. A high-pressure pump solenoid 209a, which is an electromagnetic control valve for controlling the amount of fuel intake, is provided on the fuel inlet side. The high-pressure pump solenoid 209a is of a normally closed type, closes when not energized, and opens when energized. The amount of ejection of the fuel supplied by the low-pressure fuel pump 251 is adjusted by the engine control unit 101 controlling the high-pressure pump solenoid 209a. The fuel is pressurized by the pump drive cam 200 and in a pressurization chamber 209b and fed in the pressurized state from a fuel ejection port to the common rail 253. At the fuel ejection port, an ejection valve 209c for preventing the high-pressure fuel on the downstream side from flowing back to the pressurization chamber is provided. On the common rail 253, injectors 254 and a fuel pressure sensor 256 for measuring the fuel pressure in the common rail are mounted.

FIG. 3 shows inputs to and outputs from the engine control unit 101. The engine control unit 101 is constituted by an I/O LSI 101a including an A/D converter, a CPU 101b and other components. The engine control unit 101 takes in, as input signals, a signal from a key switch 401 representing an accessory, ignition-on and starter-on operation and signals from various sensors including an accelerator opening sensor 402, a brake switch 403, a vehicle speed sensor 404, the airflow sensor 203, the throttle sensor 204, the cam angle sensor 211, the crank angle sensor 216, the water temperature sensor 217, an air-fuel ratio sensor 218, the fuel pressure sensor 256 and an oil temperature sensor 219, executes predetermined computational processes, outputs various control signals calculated as results of the computational processes, and supplies predetermined control signals to the actuators, i.e., the electrically controlled throttle 205a, the high-pressure pump solenoid 209a, the ignition coil 222, the low-pressure fuel pump 251 and the injectors 254. The engine control unit 101 thereby executes common rail internal fuel pressure control, fuel injection amount control and ignition timing control, or the like. In the I/O LSI 101a, drive circuits for driving the injectors 254 are provided, which drive the injectors 254 by boosting a voltage supplied from a battery by means of a boosting circuit (not shown), supplying the boosted voltage and performing current control by means of an IC (not shown).

Penetration of fuel injected from the injector 254, i.e., the reach of fuel, will be described with reference to FIGS. 4 to 7.

FIG. 4 shows the relationship between lapses of time after a start of injection of fuel, i.e., a start of energization, and the reach of injected fuel (penetration) in a case where fuel is injected from the injector 254 at a predetermined fuel pressure with a predetermined injection pulse width. Immediately after energization, the penetration is zero because of the existence of a delay in valve opening of the injector 254. The penetration increases gradually after a lapse of a predetermined time period. After a further lapse of a certain time period, the penetration converges because of evaporation of the fuel injected (as indicated by the broken line in the figure). The maximum value of the penetration in this case is PNT_max.

FIG. 5 shows the maximum value of the penetration, i.e., the penetration corresponding to PNT_max in FIG. 4, with respect to the injection pulse width in a case where fuel is injected from the injector 254 at a predetermined fuel pressure in an environment of a predetermined back pressure. When the injection pulse width is small, that is, the amount of injection is small, the maximum value of the penetration is smaller. When the injection pulse width is increased, the maximum value of the penetration is increased. Ti_min is the minimum pulse width with which fuel can be ejected with stability. When the pulse width is Ti_min, the penetration is at the minimum.

FIG. 6 shows the shortest distance from an injection orifice of the injector 254 to the piston crown surface or the cylinder bore wall surface with respect to the crank angle when fuel is injected from the injector 254 into the combustion chamber 207c while the piston 207a moves from the top dead center (TDC) to the bottom dead center (BDC). In FIG. 6, for ease of understanding, a case where fuel is injected in one direction from the injector 254 is shown by way of example. When the crank angle is 0 (the piston 207a is at the TDC), the crown surface of the piston 207a is closest to the injection orifice of the injector 254. At this time, therefore, the shortest distance is small. With advancement of the crank angle, the piston 207a moves from the TDC toward the BDC and the shortest distance increases gradually. When the crank angle advances after reaching CA_0, the piston 207a moves further away from the orifice of the injector 254 but the shortest distance is constant because the cylinder bore wall surface is closer to the injection orifice of the injector 254 than the crown surface of the piston 207a is.

For example, if the penetration of fuel injected (the maximum value of the reach of fuel) from the injector 254 is large, fuel injected when the crank angle is on the advance angle side (TDC side) relative to CA_0 reaches the piston crown surface, and fuel injected when the crank angle is on the retard angle side (BDC side) relative to CA_0 reaches the cylinder bore wall surface. However, if the penetration of fuel injected from the injector 254 (the maximum value of the reach of fuel) is p1, and fuel injection starts when or after the crank angle CA_p1 is reached, fuel reaches neither the piston crown surface nor the bore wall surface. Also, for example, if the penetration of fuel injected from the injector 254 is p2, and fuel injection starts when or after the crank angle CA_p2 is reached, the fuel reaches neither the piston crown surface nor the bore wall surface.

FIG. 7 relates to a case where the injector 254 is a multihole injector from which fuel is injected in a plurality of directions, and shows the shortest distance from injection orifices of the injector 254 when fuel is injected from the injector 254 into the combustion chamber 207c while the piston 207a is moving from the top dead center (TDC) to the bottom dead center (BDC). In FIG. 7, a multihole injector that injects six beams of fuel is shown by way of example.

When the crank angle is 0 (the piston 207a is at the TDC), the crown surface of the piston 207a is closest to the injection orifices of the injector 254. At this time, therefore, the shortest distance is small with respect to each beam. With advancement of the crank angle, the piston 207a moves from the TDC toward the BDC and the shortest distance for each beam increases gradually. Since the multihole injector injects fuel in the plurality of directions, the shortest distance varies among the beams. For example, since the beam No. 1 is injected in a direction of the lowest descending rate, i.e., a direction closer to a plane parallel to the crown surface, the rate of increase in the shortest distance with advancement of the crank angle in the case of the beam No. 1 is high. In contrast, the beams Nos. 5 and 6 are injected in directions of the highest descending rate, i.e., directions closer to a plane perpendicular to the crown surface, and the rate of increase in the shortest distance with advancement of the crank angle in the cases of the beams Nos. 5 and 6 is low. With respect to each beam, after a predetermined value of the crank angle is exceeded, the shortest distance is constant because the cylinder bore wall surface is closer to the injection orifice of the injector 254, while the piston 207a moves further away from the injection orifice of the injector 254.

Here, for example, if the penetration of fuel injected from the injector 254 (the maximum value of the reach of fuel) is p1, and fuel injection starts when or after the crank angle CA_p1 is reached, fuel from any beam reaches neither the piston crown surface nor the bore wall surface, as in the case shown in FIG. 6. Also, for example, if the penetration of fuel injected from the injector 254 is p2, and fuel injection starts when or after the crank angle CA_p2 is reached, fuel from any beam reaches neither the piston crown surface nor the bore wall surface. The embodiment will be described below with respect to a case where the injector 254 is a multihole injector, as an example.

While the geometrical distance is shown in each of FIGS. 6 and 7, fuel injection is influenced by the intake flow in the combustion chamber 207c in the actual combustion process. However, fuel injection is executed by dividing one injection of fuel to be made in one cycle into a plurality of injections to be made at different times, and crank angles at which fuel is injected are selected according to the penetrations (the maximum values of the reaches of fuel) with divided injection pulse widths, or injection pulse widths are selected according to injection crank angles such that the penetrations are set to allowable lengths. Thereby, the amount of fuel attached to the piston crown surface and the bore wall surface can be largely reduced in this way.

If, when a demand occurs for increasing the amount of injection with respect to a basic amount of injection of fuel based on an operating state, an amount-increasing correction is made to part of the divided injections to be made at a time and in an amount such that even when the penetration is increased only slightly, fuel is attached to the piston crown surface, then the amount of fuel attached to the piston crown surface is increased to cause an increase in the amount of discharged PMs and an increase in the amount of oil dilution.

Also, if an amount-increasing correction due to a demand for increasing the amount of injection is made to the last one of the divided injections under an operating condition without a sufficient margin of evaporation time, an increase in the amount of discharged PMs results.

Further, if an amount-increasing correction due to a demand for increasing the amount of injection is made to a compression stroke injection in the divided injections, the amount of fuel attached to the piston crown surface is increased to cause an increase in the amount of discharged PMs and an increase in the amount of oil dilution.

Concrete details of injection control for the internal combustion engine according to the embodiment will now be described.

FIG. 8 is a control block diagram showing details of divisional injection control according to the embodiment of the present invention. Fuel injection with the injectors is controlled by providing injector drive means 807 with information on injection times: IT [deg] and the injection pulse width: PULS [us] and information on the piston position represented by a crank angle sensor signal. In the present embodiment, the amount of fuel injection is controlled by adjusting the injection pulse width, and each injection time is a time at which injection is started. Injection times may be determined in a different way. For example, each injection time may be a time at which injection is terminated or an intermediate time in a period of time for injection. A mode of fuel injection in one cycle is determined by determining the number of divided injections, injection times and the injection pulse width. Each injection time is a time according to timing determined from the crank angle sensor. As a criterion for distribution of a change in the amount of fuel, the positions of injections to which the change is to be distributed in the sequence of divided injections are conceivable as well as injection times. For example, a change in the amount of fuel in the first injection may be set smaller than those in the amounts of fuel in the other injections to reduce the amount of fuel attached to the piston crown surface. Also, a change in the amount of fuel in the last injection may be set smaller than those in the amounts of fuel in the other injections to improve mixture of air and fuel. Further, each of a change in the amount of fuel in the first injection and a change in the amount of fuel in the last injection may be set smaller than those in the amounts of fuel in the other injections to achieve both limiting of the attachment of fuel to the piston crown surface and an improvement in mixture of air and fuel.

FIG. 9 shows an injection time chart of n-time-divided injections. The first of a plurality of divided injections is executed for PULS_1 [us] when a lapse of IT_1 [deg] from the time corresponding to a reference point determined on the crank angle (the piston intake top dead center in the present embodiment) is recognized by means of the crank angle sensor. Similarly, the nth one of the injections is executed for PULS_n [us] when a lapse of IT_n [deg] from the time corresponding to the reference point is recognized.

In block 801, determination is made as to whether or not divisional injection should be executed according to the operating state of the engine. In the case of execution of divisional injection, basic injection times: BASEIT_1 to BASEIT_n (n: the number of divided injections) for divided injections are computed (calculated) in block 802 using operating state parameters input thereto. In block 803, basic injection pulse widths: BASEPULS_1 to BASEPULS_n (n: the number of divided injections) for divided injections are computed (calculated) by using the operating state parameters input thereto. In block 804, a change in the injection pulse width is computed (calculated). A factor responsible for a demand for such a change is, for example, a demand for changing the injection pulse width from exhaust air-fuel ratio control for constantly maintaining the proportion of oxygen in exhaust, an increase in the amount of fuel at the time of occurrence of a demand for acceleration, or a change required by a torque controller. A change in injection pulse width is one of two kinds of changes: an increase and a reduction. In block 804, a change in the injection pulse width may be replaced with a change in the amount of injection. In block 805, from the change that has occurred while divisional injection is being executed, changes (correction values): COR_1 to COR_n (in percent [%], n: the number of divided injections) in the injections are computed (calculated) such that oil dilution and the increase in amount of PMs are limited. That is, the change in the amount of fuel is distributed to the plurality of fuel injections based on the injection times at which the plurality of fuel injections are to be made. For example, if the change in the amount of fuel is an increase, the possibility of fuel in the first injection in the intake stroke period attaching to the piston is high because of the smaller distance to the piston. Therefore, setting the increase in the first injection in the intake stroke period to zero or smaller than the increases in the other injections is conceivable. The same can be said with respect to the last injection (the nth injection in the case of n divided injections) in the compression stroke period because the movement of the piston in the compression stroke is reverse to that in the intake stroke. Further, in some case, a sufficiently long evaporation time cannot be secured with respect to either the last one of the intake stroke injections or the last one of the compression stroke injections, because the time period from the last injection to the ignition is shorter than the time periods from the other injections to ignition. With respect to such a case, setting the increase in the last injection to zero or smaller than the increases in the other injections is conceivable. If the change in the amount of fuel is a reduction, attachment of fuel to the piston can be limited by reducing the fuel injection pulse width for the first injection in the intake stroke period or the last injection in the compression stroke period, and an effect equivalent to a result of promoting the evaporation of fuel can be obtained by reducing the fuel injection pulse width for the last injection with a short evaporation time in the intake stroke period or the compression stroke period.

Injection pulse widths: PULS_1 to PULS_n (n: the number of divided injections) for the divided injections are computed (calculated) by expression 1 in block 808: injection pulse width computation means.

$$\mathrm{PULS_1} = \mathrm{BASEPULS_1} \times (1 + \mathrm{COR_1}\ [\%])$$

$$\mathrm{PULS_n} = \mathrm{BASEPULS_n} \times (1 + \mathrm{COR_n}\ [\%])$$

(expression 1)

In block 806, the basic injection times for the divided injections calculated in block 802 are corrected with respect to the computed (calculated) injection pulse widths for the divided injections so that oil dilution and the increase in the amount of PMs are limited, and injection times: IT_1 to IT_n (n: the number of divided injections) for the divided injections are computed (calculated). The injection times are corrected so that the intervals between the divided injections after the correction are the same as the injection intervals before the correction. If the injection intervals become shorter after the change of the injection pulse widths, the intervals before the change are secured to prevent variation in the amount of injection due to a reduction in stability of the injector behavior or the like as a result of short-interval injection.

If the injection intervals become longer after the change of the injection pulse widths, they are reset to the correct values to secure the desired evaporation time after the last injection, thus contributing to a reduction in the amount of discharged PMs.

FIG. 10 shows a flowchart of control in a first embodiment of divisional injection pulse width block 805. Step 1001 is interrupt processing, in which computation is performed, for example, in a cycle of 10 ms or in a reference cycle REF. In steps 1002 and 1003, the occurrence/non-occurrence of a demand for changing the amount of injection during execution of divisional injection is recognized. If there is a demand for a change, the basic injection times: BASEIT_1 to BASEIT_n for divided injections and the demanded change are read in steps 1004 and 1005.

If the demanded change is an increase, injection correction values according to the demand for the increase are computed in step 1007. FIG. 11 shows an example of a block diagram for control in step 1007. In block 1101, the time period necessary for evaporation of fuel is computed, for example, by means of a map from the engine speed, the water temperature and the demanded amount of injection, which are parameters influencing evaporation of fuel injections, and the computed time period is set as a prescribed evaporation time value.

In block 1102, a time period given for evaporation of fuel is computed from the engine speed, the injection end time and the ignition time, and determination is made as to whether this time period is equal to or longer than the prescribed evaporation time value computed in block 1101. If the given time period is equal to or longer than the prescribed value, the process advances to block 1103. In block 1103, correction values are computed by means of a map supplied with information on the arrangement of injections in increasing order of distance to the piston in divided injections made from the basic injection times computed in block 802, and with the number of divided injections. The map is intended to prevent attachment of fuel to the piston crown surface, and has increase correction values set in such a manner that a smaller correction value is set in correspondence with a higher position in the order (having a smaller distance to the piston). The correction values are set so that the sum of correction values with respect to each number of injections is 1 (100%). Also, 0 may be set as the minimum of the correction values.

If the given time period is shorter than the prescribed value, the process advances to block 1104. In block 1104, correction values are computed by means of a map supplied with information on the arrangement of injections in increasing order of distance to the piston in divided injections made from the basic injection times computed in block 802, and with the number of divided injections. The map is intended to secure the desired evaporation time, and has an increase correction value for the last injection set smallest. The map is also intended to prevent attachment of fuel to the piston crown surface, and has increase correction values set in such a manner that a smaller correction value is set in correspondence with a higher position in the order (having a smaller distance to the piston) except for the last injection. The correction values are set so that the sum of correction values with respect to each number of injections in the map is 1 (100%). Also, 0 may be set as the minimum of the correction values.

If the read demanded change is a reduction in step 1006, injection correction values under the demand for the reduction are computed in step 1008. FIG. 12 shows an example of a block diagram for control in step 1008. In block 1101, the time period necessary for evaporation of fuel is computed and set as a prescribed evaporation time value. In block 1102, a time period given for evaporation of fuel is computed and determination is made as to whether this time period is equal to or longer than the prescribed evaporation time value computed in block 1101.

If the given time period is equal to or longer than the prescribed value, the process advances to block 1201. In block 1201, correction values by which the amount of injection is reduced are computed by means of a map supplied with information on the arrangement of injections in increasing order of distance to the piston in divided injections made from the basic injection times computed in block 802, and with the number of divided injections. The map is intended to reduce the amount of attachment of fuel to the piston crown surface, and has reduction correction values set in such a manner that a larger correction value is set in correspondence with a higher position in the order (having a smaller distance to the piston). The correction values are set so that the sum of correction values with respect to each number of injections is 1 (100%). Also, 1 may be set as the maximum of the correction values.

If the given time period is shorter than the prescribed value, the process advances to block 1202. In block 1202, correction values are computed by means of a map supplied with information on the arrangement of injections in increasing order of distance to the piston in divided injections made from the basic injection times computed in block 802, and with the number of divided injections. The map is intended to increase the desired evaporation time, and has a reduction correction value for the last injection set largest. The map is also intended to reduce the amount of attachment of fuel to the piston crown surface, and has reduction correction values set in such a manner that a larger correction value is set in correspondence with a higher position in the order (having a smaller distance to the piston) except for the last injection. The correction values are set so that the sum of correction values with respect to each number of injections in the map is 1 (100%). Also, 1 may be set as the maximum of the correction values.

FIG. 13 shows a flowchart for control in a second embodiment of divisional injection pulse width block 805. Step 1301 is interrupt processing, in which computation is performed, for example, in a cycle of 10 ms or in a reference cycle REF. In step 1302, the occurrence/non-occurrence of a demand for changing the amount of injection during execution of divisional injection is recognized. If there is a demand for a change, the basic injection times: BASEIT_1 to BASEIT_n for divided injections and the demanded change are read in step 1303.

If it is determined in step 1304 that the demand for a change is a demand for an incremental change, determination is made in step 1305 as to whether the demanded value for incremental change is equal to or larger than a prescribed value. This prescribed value is assumed to be a minimum amount of injection at which the injector can inject fuel with stability. If the demanded value is equal to or larger than the prescribed value, determination of an evaporation time is made in step 1306. For this determination, the above-described block 1102 is used. If it is determined that the evaporation time is equal to or longer than a prescribed value, the number of divided injections is increased in step 1307. This control enables avoiding correction made to an injection closer to the piston crown surface, thus preventing increases in the amount of PMs and the amount of oil dilution.

If it is determined in step 1305 that the demanded value for incremental change is smaller than the prescribed value, and if it is determined in step 1306 that the evaporation time is shorter than the prescribed value, a transition is made to the above-described block 1007: computation of injection correction values under a demand for an increase.

If it is determined in step 1304 that the demand for a change is a demand for a decremental change, determination is made in step 1308 as to whether the demanded value for decremental change is equal to or larger than a prescribed value. This prescribed value is assumed to be the sum of margins for the divided injections from the minimum amount of injection at which the injector can inject fuel with stability. If the demanded value is equal or larger than the prescribed value, the number of divided injections is reduced in step 1310. This control enables avoiding injection variation even under a demand for reducing the amount of injection, thus enabling stable combustion.

If it is determined in step 1308 as to whether the demanded value for decremental change is smaller than a prescribed value, a transition is made to the above-described block 1008: computation of injection correction values under a demand for a reduction.

An example of the effects of the present invention will be described with reference to FIG. 14. FIG. 14 is a time chart showing an example of the related art and the present invention in a case where a demand for increasing the amount of injection occurs while divisional injection is being executed. In the related art, a demanded increase in amount of injection is uniformly distributed to divided injections. Therefore, fuel in the initial injection, which is an injection closer to the piston crown surface, at about the time corresponding to the top dead center is attached to the piston, resulting in increases in the amount of discharged PMs and the amount of oil dilution.

In the present embodiment, the increase in the amount of injection in the initial injection with a smaller distance to the piston crown surface and at about the time corresponding to the top dead center is set smallest in the divided injections to prevent attachment of fuel to the piston crown surface, thus avoiding increasing the amount of discharged PMs and the amount of oil dilution.

That is, according to the present embodiment, in a case where a demand for an amount of injection or a demand for an injection pulse width is changed while divisional injection in which an injection of fuel in one cycle is divided into a plurality of injections, the amounts of injection to be made as the divided injections are set so as to secure the desired evaporation time and prevent attachment of fuel to the piston crown surface, thereby limiting the amount of oil dilution and the increase in amount of PMs. Thus, contributions to the stabilization of combustion and improvements in exhaust gas performance and fuel consumption performance are made.

DESCRIPTION OF SYMBOLS

| | |
|---|---|
| 1 | In-cylinder injection engine |
| 101 | Engine control unit |
| 101a | I/O LSI |
| 101b | CPU |
| 200 | Pump drive cam |
| 201 | Intake pipe |
| 202 | Air cleaner |
| 203 | Air flow sensor |
| 204 | Throttle sensor |
| 205 | Throttle body |
| 205a | electrically controled throttle |
| 206 | Collector |
| 207a | Piston |
| 207b | Cylinder |
| 207c | Combustion chamber |
| 207d | Crank shaft |
| 208 | Ignition plug |

209 High-pressure fuel pump
211 Cam angle sensor
216 Crank angle sensor
217 Water temperature sensor
218 Air-fuel ratio sensor
219 Oil temperature sensor
222 Ignition coil
225 Intake valve
226 Exhaust valve
250 Fuel tank
251 Low-pressure fuel pump
252 Fuel pressure regulator
253 Common rail
254 Injector
256 Fuel pressure sensor
401 Key switch
402 Accelerator opening sensor
403 Brake switch
404 Vehicle speed sensor

## Claims

**1.** A control apparatus for an internal combustion engine having a fuel injection valve for directly injecting fuel into a combustion chamber (207c) formed with at least a cylinder (207b) and a piston (207a), the control apparatus (101) controlling fuel injection from the fuel injection valve (254), the control apparatus (101) comprising:

means for performing divisional injection control including executing a plurality of fuel injections in one cycle;
means for computing a basic amount of fuel injection based on an operating state;
means for computing a change in the amount of fuel based on the operating state; and
means for distributing the change in the amount of fuel to the plurality of the fuel injections based on injection times at which the plurality of the fuel injections are executed **characterized in that** the change in the amount of fuel is distributed to a plurality of fuel injections of the same stroke period and the change in the amount of fuel in the fuel injection made with an injection pulse width at an injection time at a most advanced angle in an intake stroke period or at a most retarded angle in a compression stroke period in the plurality of the fuel injections is set smallest in comparison with the changes in the amounts of fuel at the other injection times in the same stroke period.

**2.** The control apparatus for the internal combustion engine according to claim 1, wherein the change in the amount of fuel in the fuel injection at the latest injection time is set smallest in comparison with the changes in the amounts of fuel at the other injection times in the stroke period.

**3.** The control apparatus for the internal combustion engine according to claims 1 or 2, wherein when the change in the amount of fuel exceeds a threshold value, the number of the divided injections is increased.

**4.** The control apparatus for the internal combustion engine according to claims 1 or 2, wherein when the change in the amount of fuel is lower than the threshold value, the number of the divided injections is reduced.

**5.** The control apparatus for the internal combustion engine according to claim 1, further comprising means for selecting, according to the operating states, between
setting smallest the change in the amount of fuel in the fuel injection made with the injection pulse width at the injection time at the most advanced angle in the intake stroke period or at the most retarded angle in the compression stroke period in the plurality of the fuel injections in comparison with the changes in the amounts of fuel at the other injection times in the stroke period, and
setting smallest the change in the amount of fuel in the fuel injection at the latest fuel injection time.

**6.** The control apparatus for the internal combustion engine according to claim 5, wherein the selecting is performed on the basis of at least one of a water temperature, an engine speed, a sum of the injection periods in one cycle, and a demanded amount of injection.

7. The control apparatus for the internal combustion engine according to any one of claims 1 to 4, wherein the injection times are determined so that each of the injection intervals between the divided injections is equal to or larger than a predetermined value.

8. The control apparatus for an internal combustion engine according to claim 1,
wherein the changes in the amount of fuel distributed to the first and last divided injections are set smaller than the changes in the amount of fuel distributed to the other divided injections.

**Patentansprüche**

1. Steuervorrichtung für eine Brennkraftmaschine, die ein Kraftstoffeinspritzventil zum direkten Einspritzen von Kraftstoff in einen Verbrennungsraum (207c), der mit wenigstens einem Zylinder (207b) und einem Kolben (207a) gebildet ist, aufweist, wobei die Steuervorrichtung (101) die Kraftstoffeinspritzung von dem Kraftstoffeinspritzventil (254) steuert, wobei die Steuervorrichtung (101) umfasst:

   Mittel zum Ausführen einer Teileinspritzungssteuerung, die das Ausführen mehrerer Kraftstoffeinspritzungen in einem Zyklus enthält;
   Mittel zum Berechnen einer Grundmenge der Kraftstoffeinspritzung auf der Grundlage eines Betriebszustands;
   Mittel zum Berechnen einer Änderung der Menge des Kraftstoffs auf der Grundlage des Betriebszustands; und
   Mittel zum Verteilen der Änderung der Menge des Kraftstoffs auf die mehreren Kraftstoffeinspritzungen auf der Grundlage der Einspritzzeitpunkte, bei denen die mehreren Kraftstoffeinspritzungen ausgeführt werden, **dadurch gekennzeichnet, dass** die Änderung der Menge des Kraftstoffs auf mehrere Kraftstoffeinspritzungen derselben Taktperiode verteilt wird und die Änderung der Menge des Kraftstoffs in der Kraftstoffeinspritzung mit einer Einspritzpulsbreite zu einem Einspritzzeitpunkt in einer Ansaugtaktperiode bei einem am meisten nach früh verstellten Winkel oder in einer Verdichtungstaktperiode bei einem am meisten nach spät verstellten Winkel in den mehreren Kraftstoffeinspritzungen im Vergleich zu den Änderungen der Mengen des Kraftstoffs zu den anderen Einspritzzeitpunkten in derselben Taktperiode am kleinsten hergestellt wird.

2. Steuervorrichtung für die Brennkraftmaschine nach Anspruch 1, wobei die Änderung der Menge des Kraftstoffs in der Kraftstoffeinspritzung zu dem spätesten Einspritzzeitpunkt im Vergleich zu den Änderungen der Mengen des Kraftstoffs zu den anderen Einspritzzeitpunkten in der Taktperiode am kleinsten eingestellt wird.

3. Steuervorrichtung für die Brennkraftmaschine nach Anspruch 1 oder 2, wobei die Anzahl der Teileinspritzungen erhöht wird, wenn die Änderung der Menge des Kraftstoffs einen Schwellenwert übersteigt.

4. Steuervorrichtung für die Brennkraftmaschine nach Anspruch 1 oder 2, wobei die Anzahl der Teileinspritzungen verringert wird, wenn die Änderung der Menge des Kraftstoffs kleiner als der Schwellenwert ist.

5. Steuervorrichtung für die Brennkraftmaschine nach Anspruch 1, die ferner Mittel umfasst, um in Übereinstimmung mit den Betriebszuständen dazwischen zu wählen,
die Änderung der Menge des Kraftstoffs in der Kraftstoffeinspritzung, die mit der Einspritzpulsbreite zu dem Einspritzzeitpunkt bei dem am meisten nach früh verstellten Winkel in der Ansaugtaktperiode oder bei dem am meisten nach spät verstellten Winkel in der Verdichtungstaktperiode in den mehreren Kraftstoffeinspritzungen hergestellt wird, im Vergleich zu den Änderungen der Mengen des Kraftstoffs zu den anderen Einspritzzeitpunkten in der Taktperiode am kleinsten einzustellen; und
die Änderung der Menge des Kraftstoffs in der Kraftstoffeinspritzung zu dem spätesten Kraftstoffeinspritzzeitpunkt am kleinsten einzustellen.

6. Steuervorrichtung für die Brennkraftmaschine nach Anspruch 5, wobei das Auswählen auf der Grundlage einer Wassertemperatur und/oder einer Kraftmaschinendrehzahl und/oder einer Summe der Einspritzperioden in einem Zyklus und/oder einer geforderten Menge der Einspritzung ausgeführt wird.

7. Steuervorrichtung für die Brennkraftmaschine nach einem der Ansprüche 1 bis 4, wobei die Einspritzzeitpunkte in der Weise bestimmt werden, dass jedes der Einspritzintervalle zwischen den Teileinspritzungen gleich oder größer einem vorgegebenen Wert ist.

**8.** Steuervorrichtung für eine Brennkraftmaschine nach Anspruch 1, wobei die Änderungen der Menge des an die erste und an die letzte Teileinspritzung verteilten Kraftstoffs kleiner als die Änderungen der Menge des an die anderen Teileinspritzungen verteilten Kraftstoffs eingestellt werden.

**Revendications**

**1.** Appareil de commande pour un moteur à combustion interne ayant une valve d'injection de carburant pour injecter directement du carburant dans une chambre de combustion (207c) formée avec au moins un cylindre (207b) et un piston (207a), l'appareil de commande (101) commandant l'injection du carburant depuis la valve d'injection de carburant (254), l'appareil de commande (101) comprenant :

un moyen pour exécuter une commande d'injection divisionnaire incluant l'exécution d'une pluralité d'injections de carburant dans un cycle ;
un moyen pour calculer une quantité de base d'injection de carburant sur la base d'un état de fonctionnement ;
un moyen pour calculer un changement dans la quantité de carburant, basé sur l'état de fonctionnement ; et
un moyen pour distribuer le changement dans la quantité de carburant à la pluralité d'injections de carburant, sur la base d'instants d'injection auxquels la pluralité d'injection de carburant sont exécutées,
**caractérisé en ce que** le changement dans la quantité de carburant est distribué à une pluralité d'injections de carburant de la même période de course, et le changement dans la quantité de carburant dans l'injection de carburant faite avec une largeur d'impulsion d'injection à un instant d'injection à un angle le plus en avance dans une période de la course d'admission ou à un angle le plus en retard dans une période de la course de compression, dans la pluralité d'injections de carburant, et fixé à la plus petite valeur par comparaison avec les changements dans les quantités de carburant aux autres instants d'injection dans la même période de course.

**2.** Appareil de commande pour moteur à combustion interne selon la revendication 1, dans lequel le changement dans la quantité de carburant dans l'injection de carburant à l'instant d'injection le plus tardif est fixé à la plus petite valeur par comparaison avec les changements dans les quantités de carburant aux autres instants d'injection dans la période de course.

**3.** Appareil de commande pour le moteur à combustion interne selon les revendications 1 ou 2, dans lequel quand le changement dans la quantité de carburant excède une valeur seuil, le nombre d'injections divisées est augmenté.

**4.** Appareil de commande pour moteur à combustion interne selon les revendications 1 ou 2, dans lequel quand le changement dans la quantité de carburant est inférieur à la valeur seuil, le nombre des injections divisées est réduit.

**5.** Appareil de commande pour moteur à combustion interne selon la revendication 1, comprenant en outre un moyen pour sélectionner, en accord avec les états de fonctionnement, entre
l'établissement à la valeur la plus petite du changement dans la quantité de carburant dans l'injection de carburant faite avec la largeur d'impulsion d'injection à l'instant d'injection à l'angle le plus en avance dans la période de course d'admission ou à l'angle le plus en retard dans la période de la course de compression dans la pluralité d'injections de carburant, par comparaison avec les changements dans les quantités de carburant aux autres instants d'injection dans la période de course, et
l'établissement à la valeur la plus petite du changement dans la quantité de carburant dans l'injection de carburant à l'instant d'injection de carburant le plus tardif.

**6.** Appareil de commande pour moteur à combustion interne selon la revendication 5, dans lequel la sélection est exécutée sur la base d'au moins un paramètre parmi la température de l'eau, la vitesse du moteur, la somme des périodes d'injection dans un cycle, et une quantité d'injection demandée.

**7.** Appareil de commande pour moteur à combustion interne selon l'une quelconque des revendications 1 à 4, dans lequel les instants d'injection sont déterminés de telle façon que chacun des intervalles d'injection entre injections divisées est égal ou supérieur à une valeur déterminée.

**8.** Appareil de commande pour un moteur à combustion interne selon la revendication 1, dans lequel les changements dans la quantité de carburant distribué à la première et à la dernière injection divisée sont choisis plus petits que les changements dans la quantité de carburant distribué aux autres injections divisées.

FIG. 1

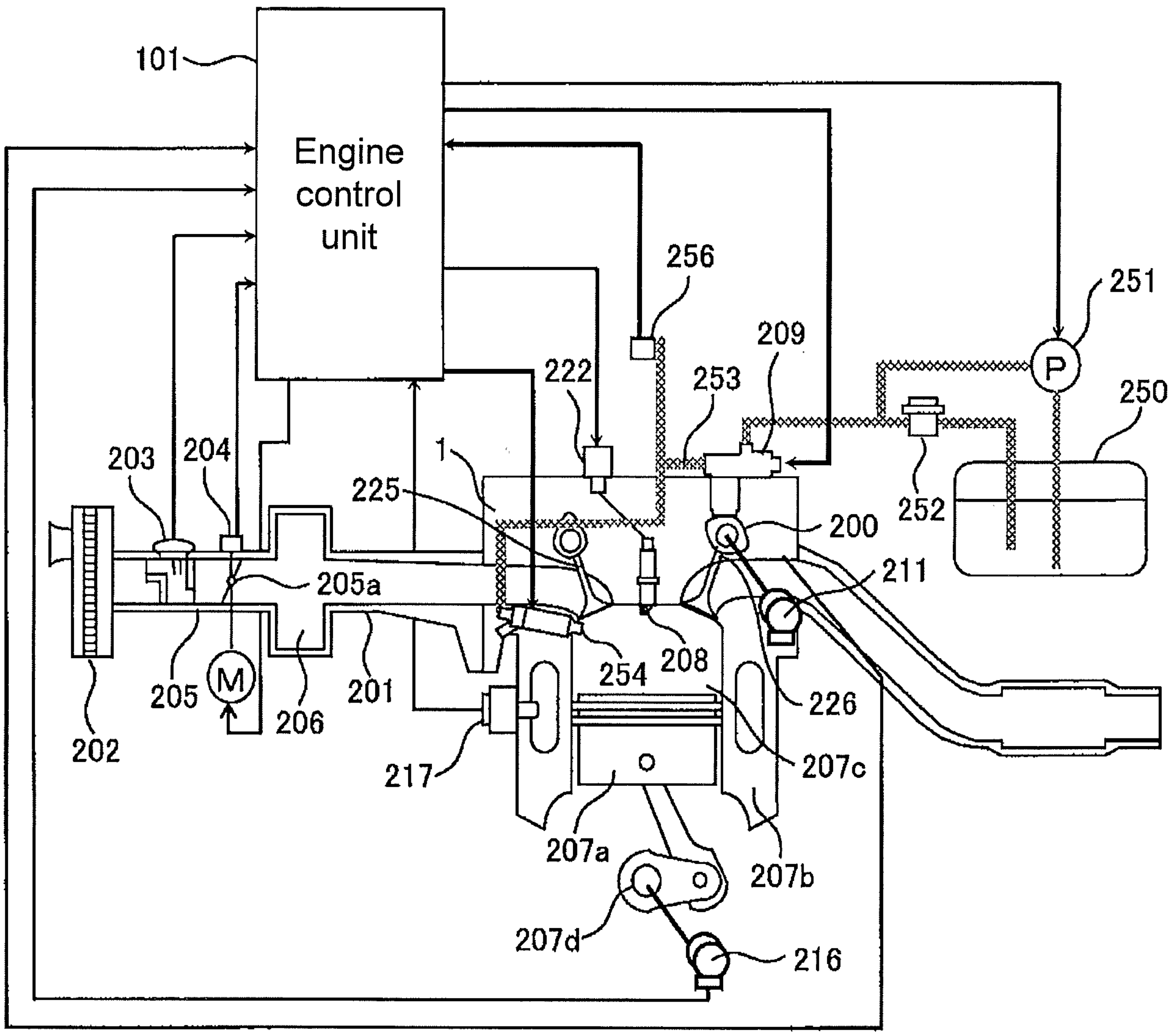
101
Engine control unit
256
251
209
222
253
250
203
204
1
225
252
200
211
205a
254
208
205
201
226
206
202
217
207c
207a
207b
207d
216

FIG. 2

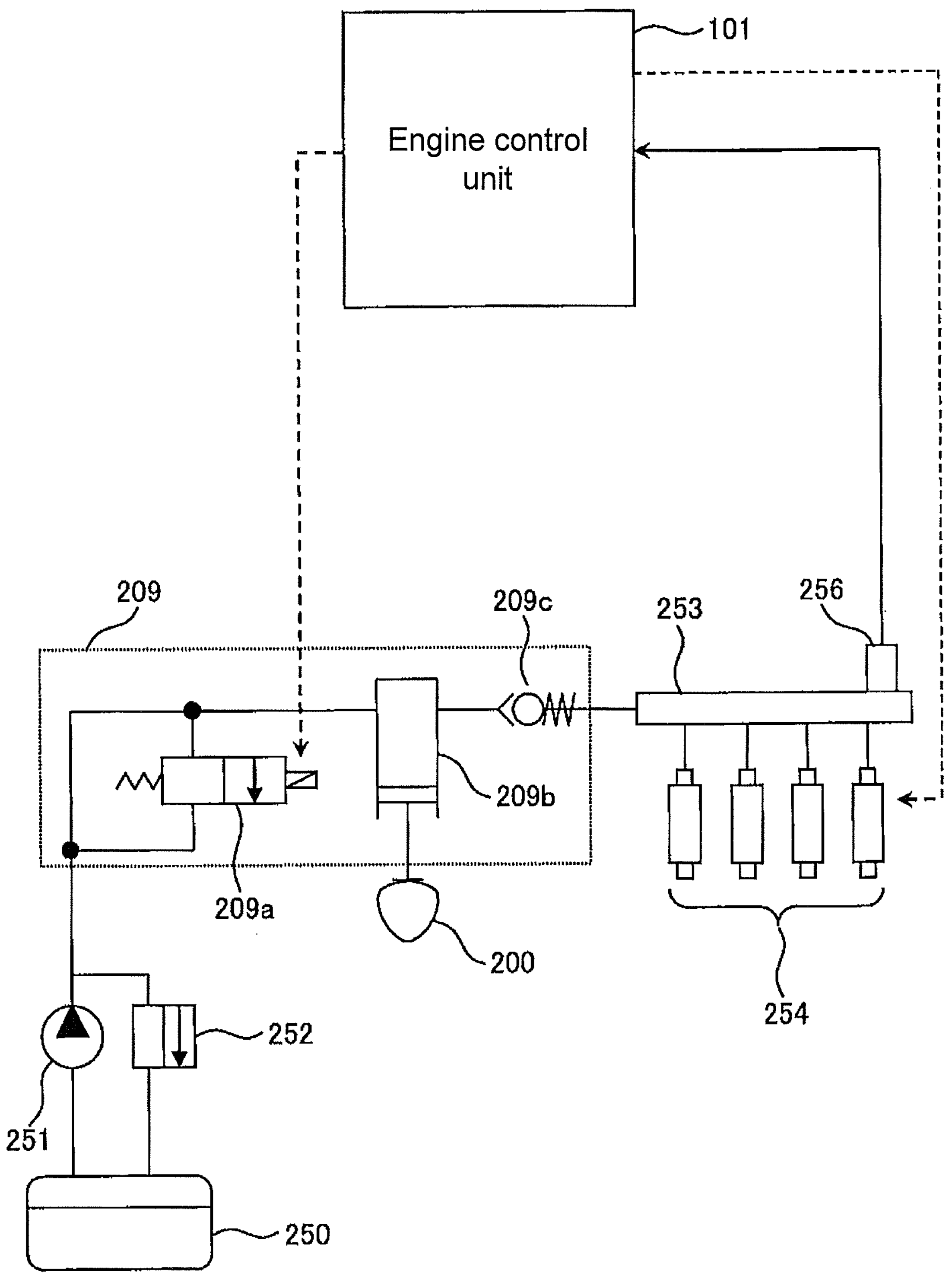
101
Engine control unit
209
209c
253
256
209b
209a
200
254
252
251
250

FIG. 3

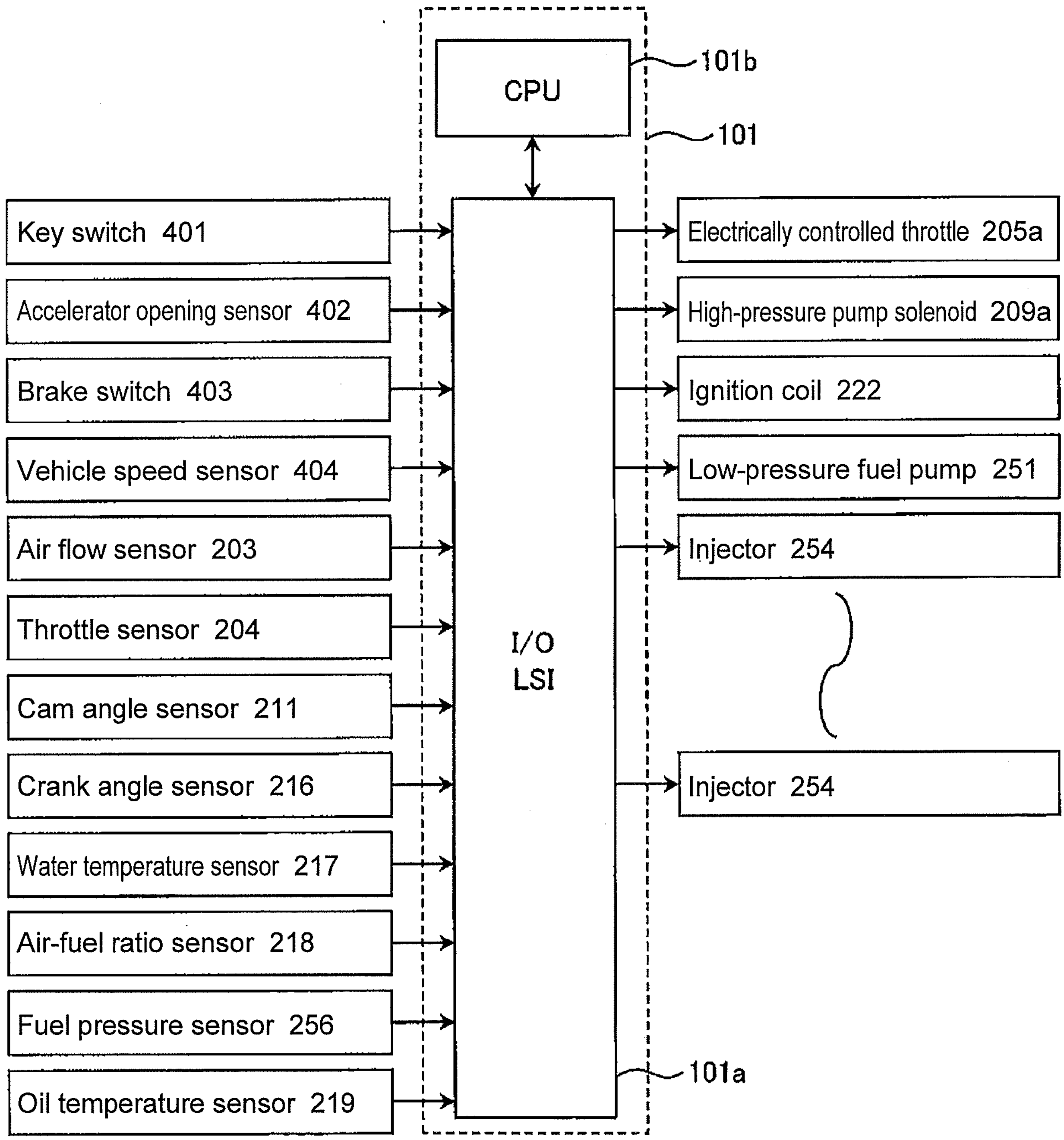
CPU
101b
101
I/O
LSI
101a
Key switch 401
Accelerator opening sensor 402
Brake switch 403
Vehicle speed sensor 404
Air flow sensor 203
Throttle sensor 204
Cam angle sensor 211
Crank angle sensor 216
Water temperature sensor 217
Air-fuel ratio sensor 218
Fuel pressure sensor 256
Oil temperature sensor 219
Electrically controlled throttle 205a
High-pressure pump solenoid 209a
Ignition coil 222
Low-pressure fuel pump 251
Injector 254
Injector 254

FIG. 4

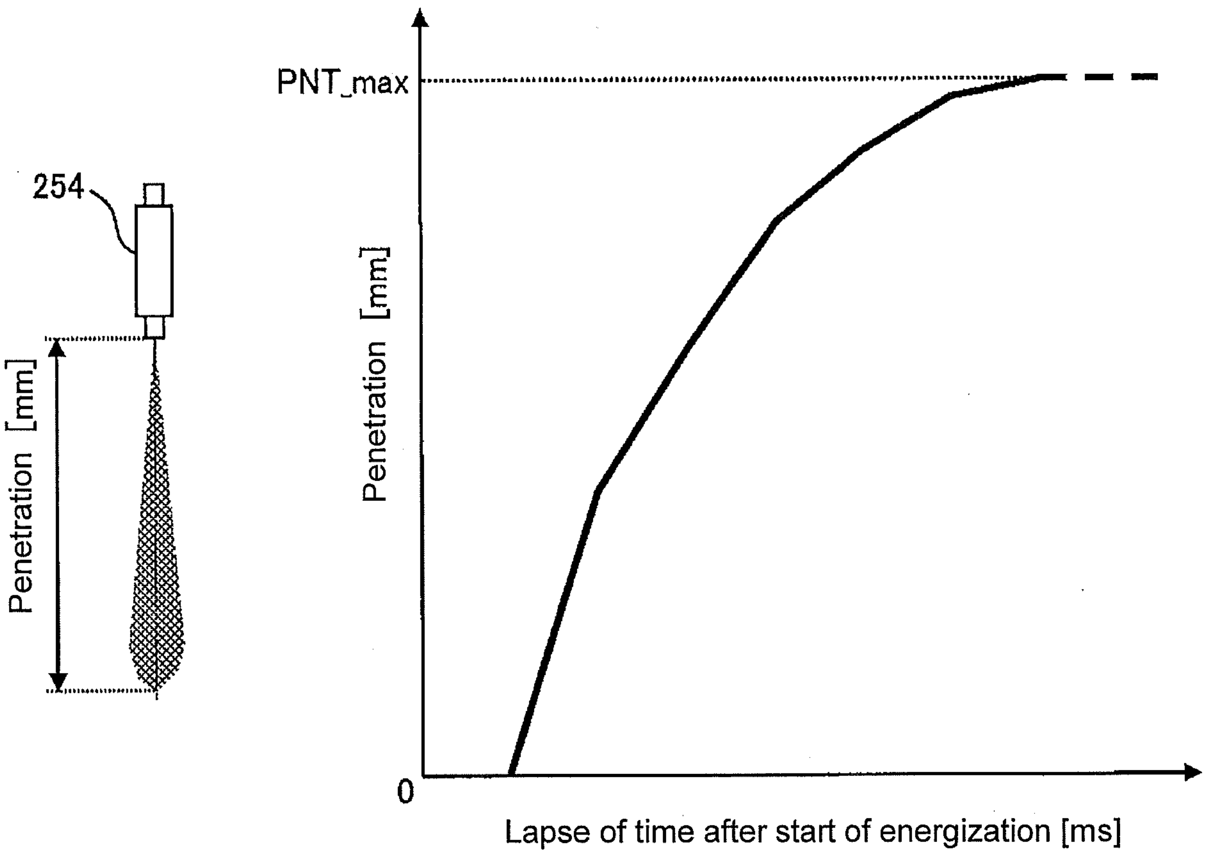
254
Penetration [mm]
PNT_max
Penetration [mm]
0
Lapse of time after start of energization [ms]

FIG. 5

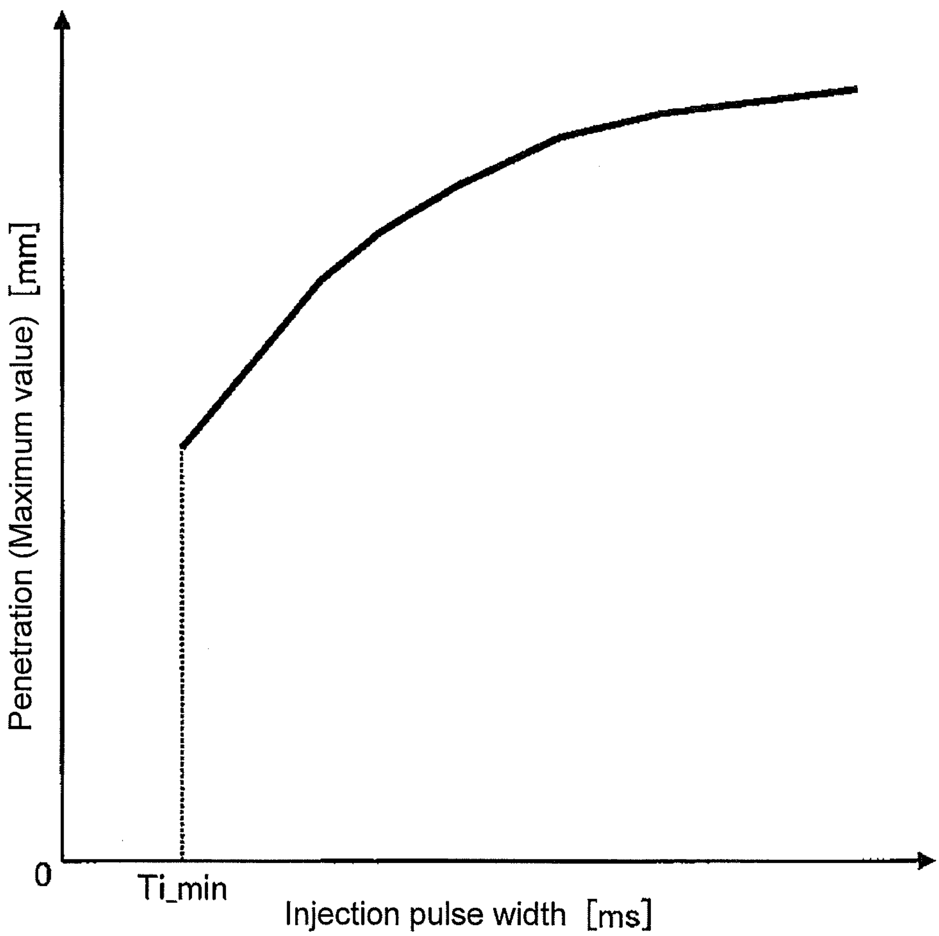
Penetration (Maximum value) [mm]
0
Ti_min
Injection pulse width [ms]

FIG. 6

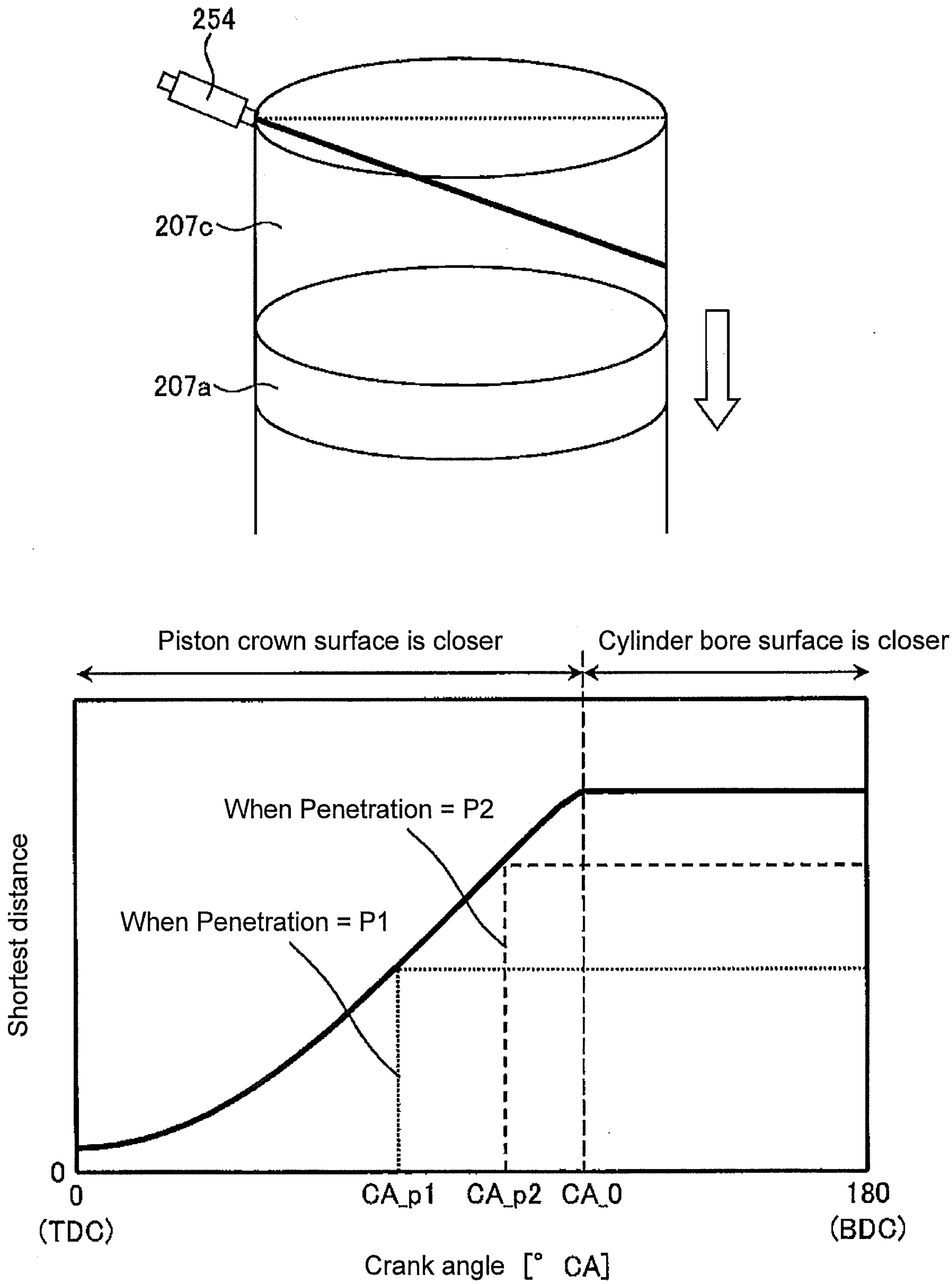
254
207c
207a
Piston crown surface is closer
Cylinder bore surface is closer
When Penetration = P2
When Penetration = P1
Shortest distance
0
0
(TDC)
CA_p1
CA_p2
CA_0
180
(BDC)
Crank angle [° CA]

FIG. 7

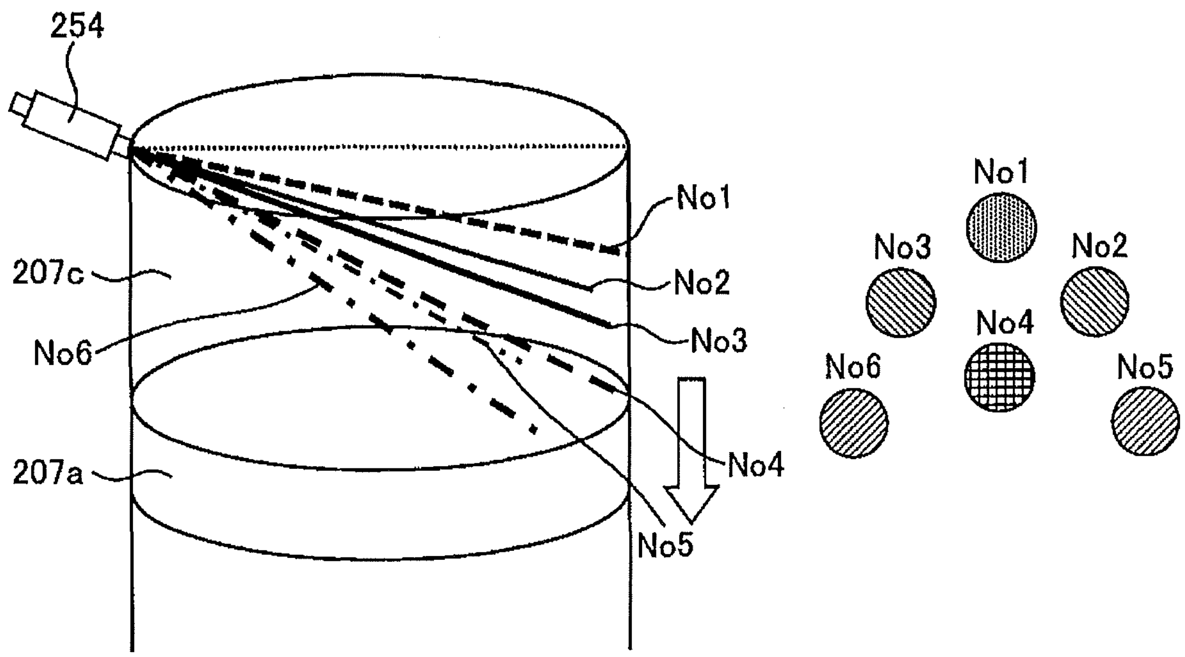
254
207c
No6
207a
No1
No2
No3
No4
No5
No1
No3
No2
No4
No6
No5

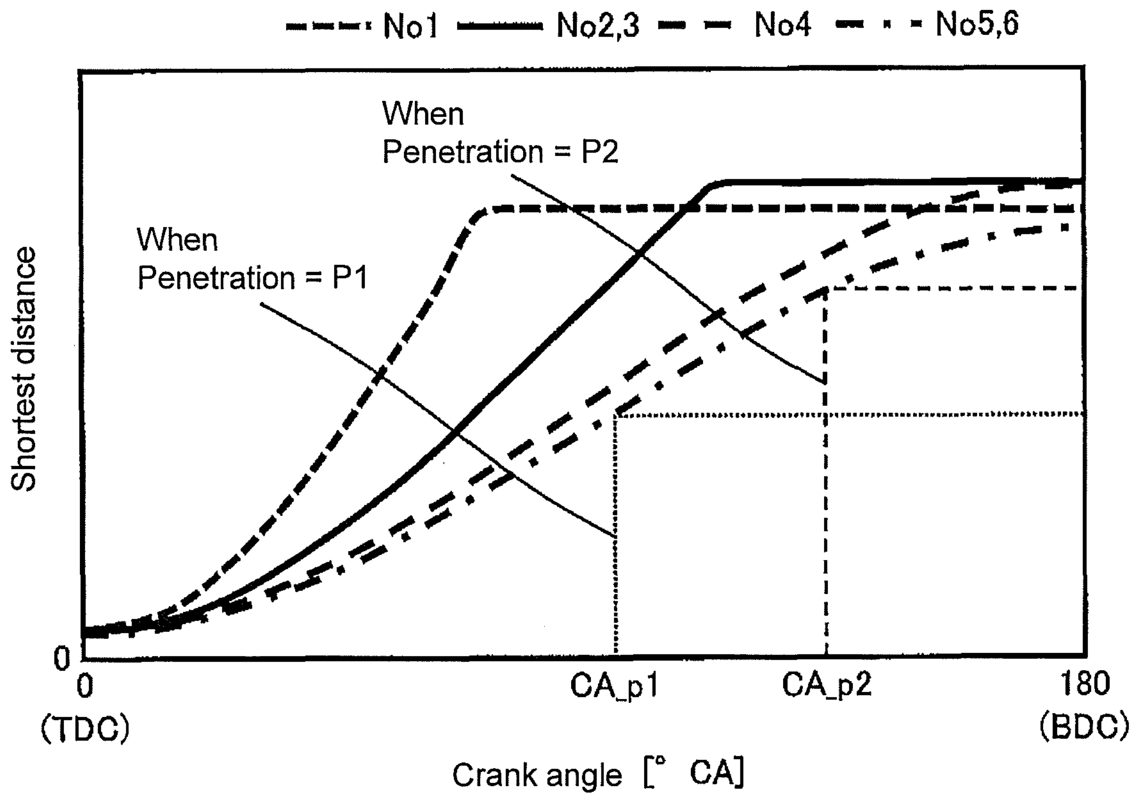
No1
No2,3
No4
No5,6
When
Penetration = P2
When
Penetration = P1
Shortest distance
0
0
(TDC)
CA_p1
CA_p2
180
(BDC)
Crank angle [° CA]

FIG. 8

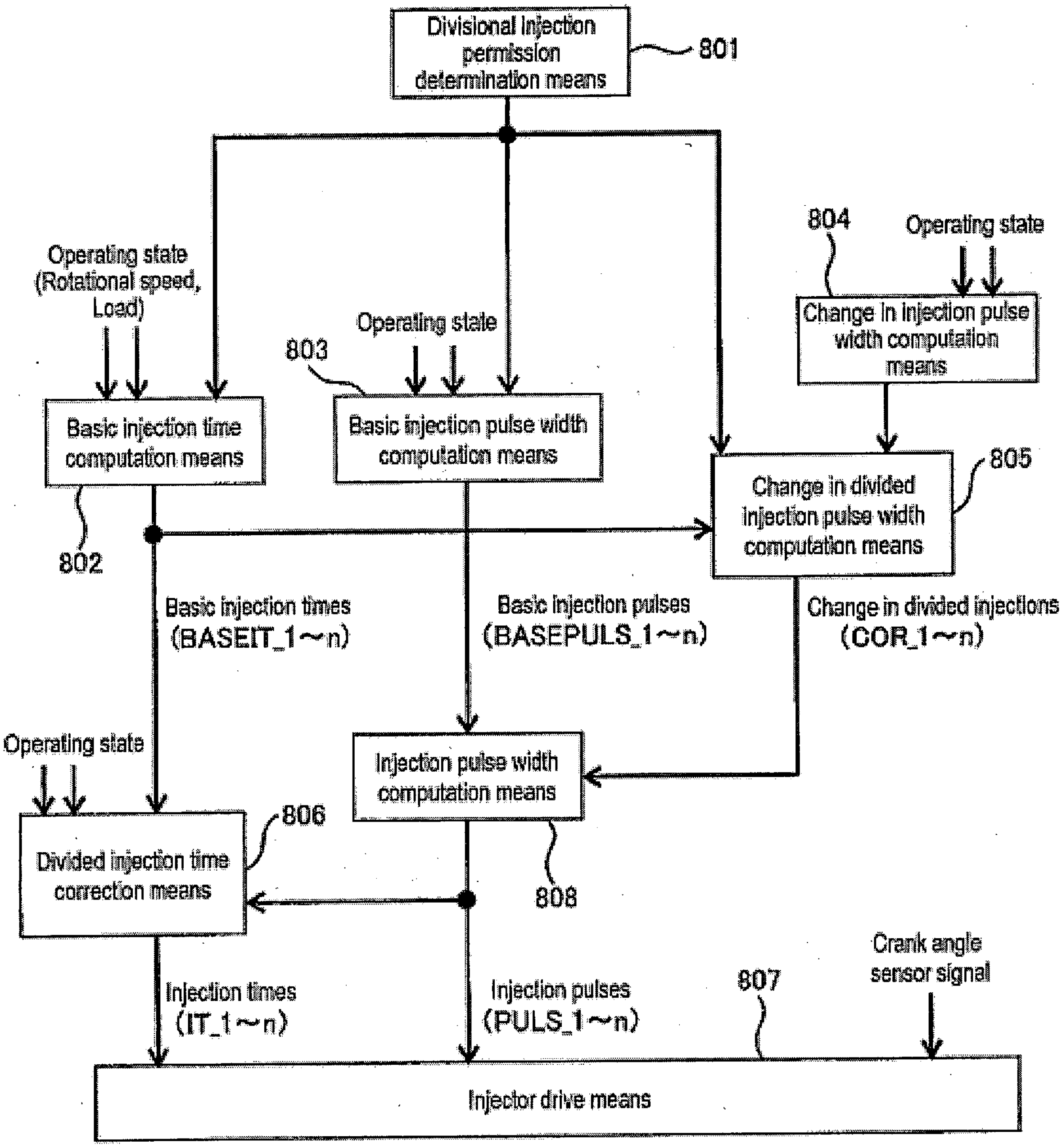
Divisional injection permission determination means
801
Operating state (Rotational speed, Load)
Operating state
803
804
Operating state
Change in injection pulse width computation means
Basic injection time computation means
Basic injection pulse width computation means
805
Change in divided injection pulse width computation means
802
Basic injection times (BASEIT_1~n)
Basic injection pulses (BASEPULS_1~n)
Change in divided injections (COR_1~n)
Operating state
Injection pulse width computation means
806
Divided injection time correction means
808
Crank angle sensor signal
Injection times (IT_1~n)
Injection pulses (PULS_1~n)
807
Injector drive means

FIG. 9

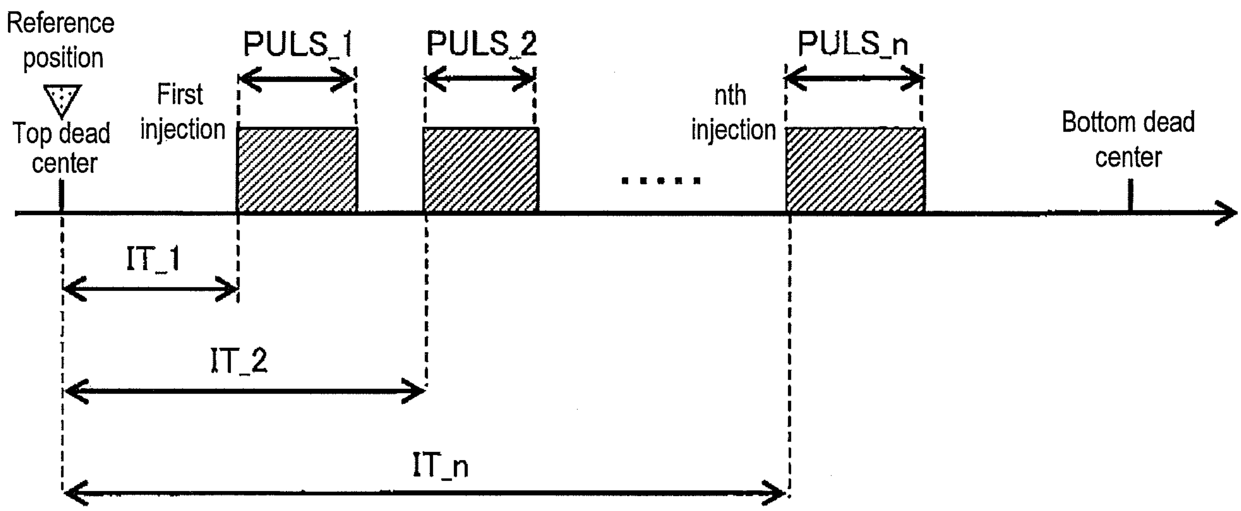
Reference position
Top dead center
First injection
PULS_1
PULS_2
nth injection
PULS_n
Bottom dead center
IT_1
IT_2
IT_n

FIG. 10

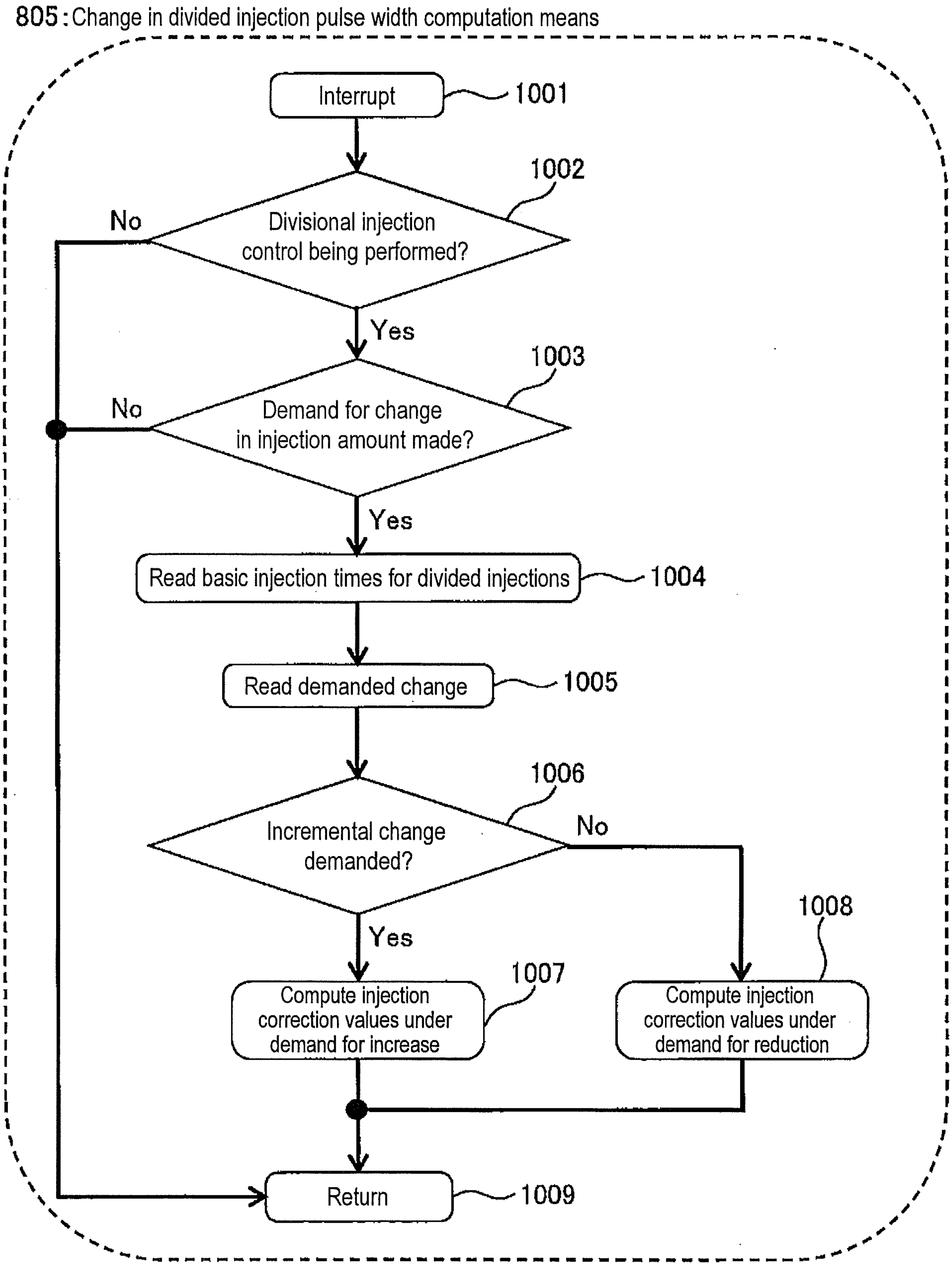
805: Change in divided injection pulse width computation means
Interrupt
1001
1002
Divisional injection control being performed?
No
Yes
1003
Demand for change in injection amount made?
No
Yes
Read basic injection times for divided injections
1004
Read demanded change
1005
1006
Incremental change demanded?
No
Yes
1007
1008
Compute injection correction values under demand for increase
Compute injection correction values under demand for reduction
Return
1009

FIG. 11

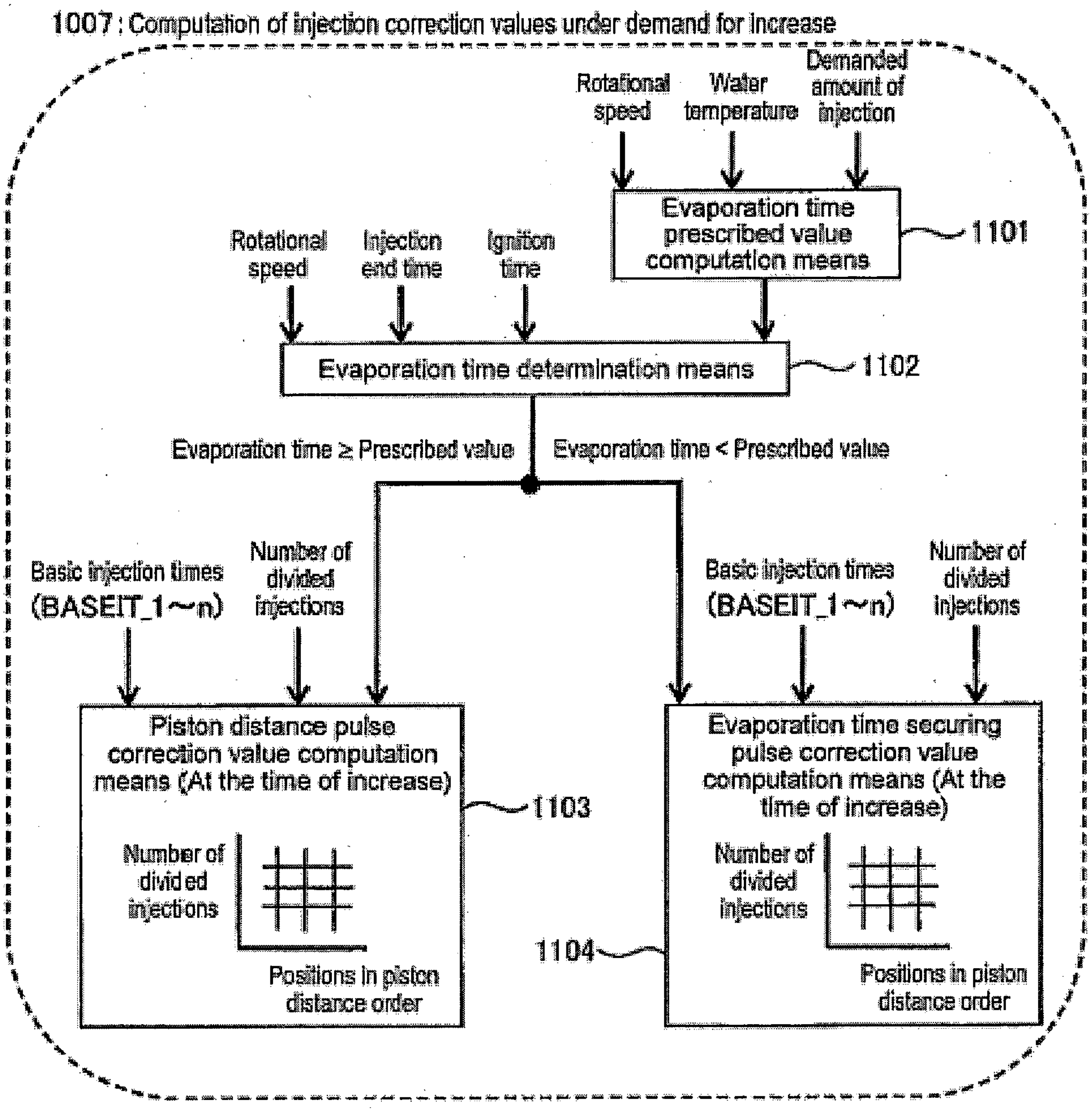
1007 : Computation of injection correction values under demand for increase
Rotational speed
Water temperature
Demanded amount of injection
Evaporation time prescribed value computation means
1101
Rotational speed
Injection end time
Ignition time
Evaporation time determination means
1102
Evaporation time ≥ Prescribed value
Evaporation time < Prescribed value
Basic injection times (BASEIT_1~n)
Number of divided injections
Basic injection times (BASEIT_1~n)
Number of divided injections
Piston distance pulse correction value computation means (At the time of increase)
1103
Number of divided injections
Positions in piston distance order
Evaporation time securing pulse correction value computation means (At the time of increase)
1104
Number of divided injections
Positions in piston distance order

FIG. 12

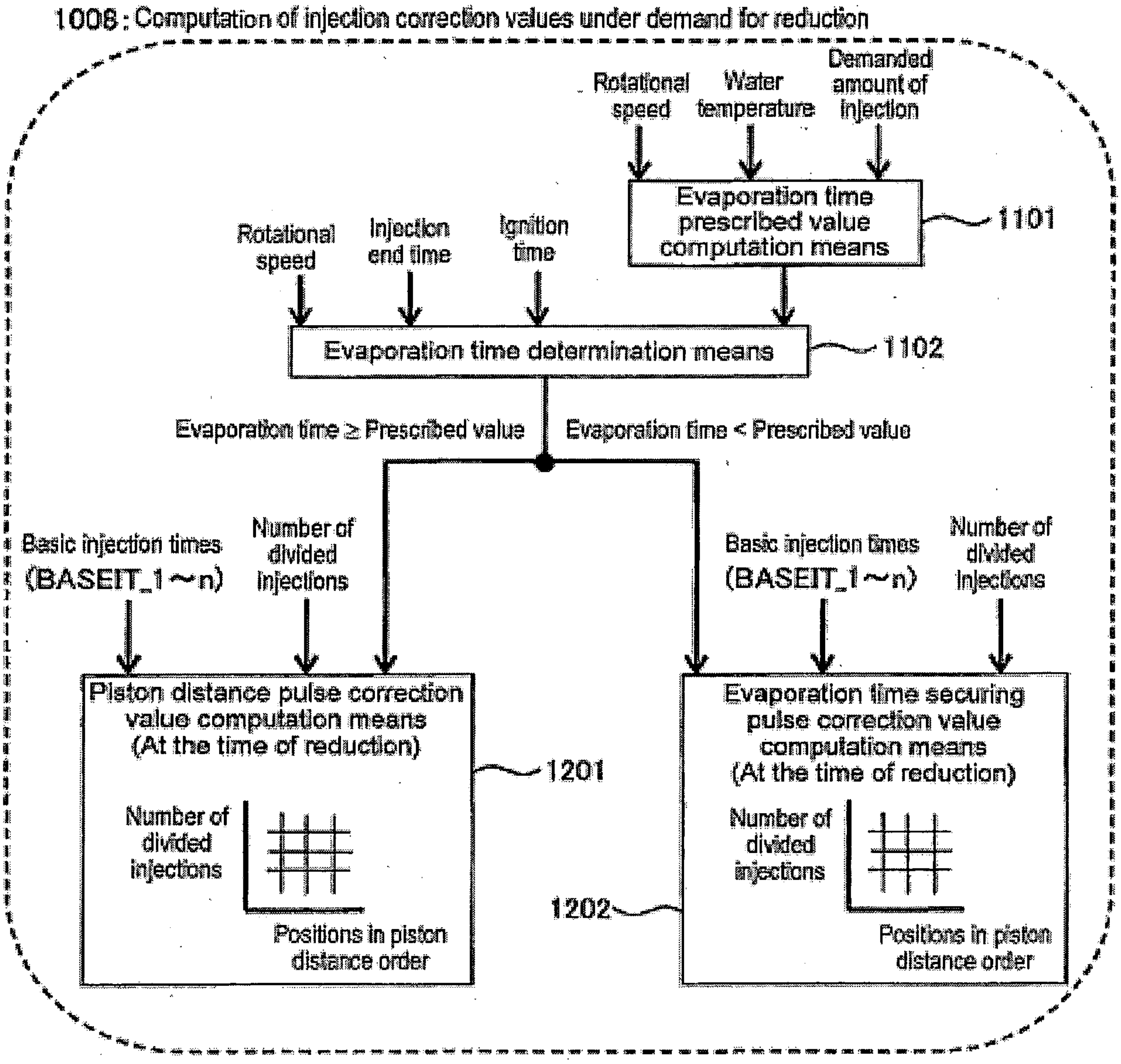
1008 : Computation of injection correction values under demand for reduction
Rotational speed
Water temperature
Demanded amount of injection
Evaporation time prescribed value computation means
1101
Rotational speed
Injection end time
Ignition time
Evaporation time determination means
1102
Evaporation time ≥ Prescribed value
Evaporation time < Prescribed value
Basic injection times (BASEIT_1 ~ n)
Number of divided injections
Piston distance pulse correction value computation means (At the time of reduction)
1201
Number of divided injections
Positions in piston distance order
Basic injection times (BASEIT_1 ~ n)
Number of divided injections
Evaporation time securing pulse correction value computation means (At the time of reduction)
1202
Number of divided injections
Positions in piston distance order

FIG. 13

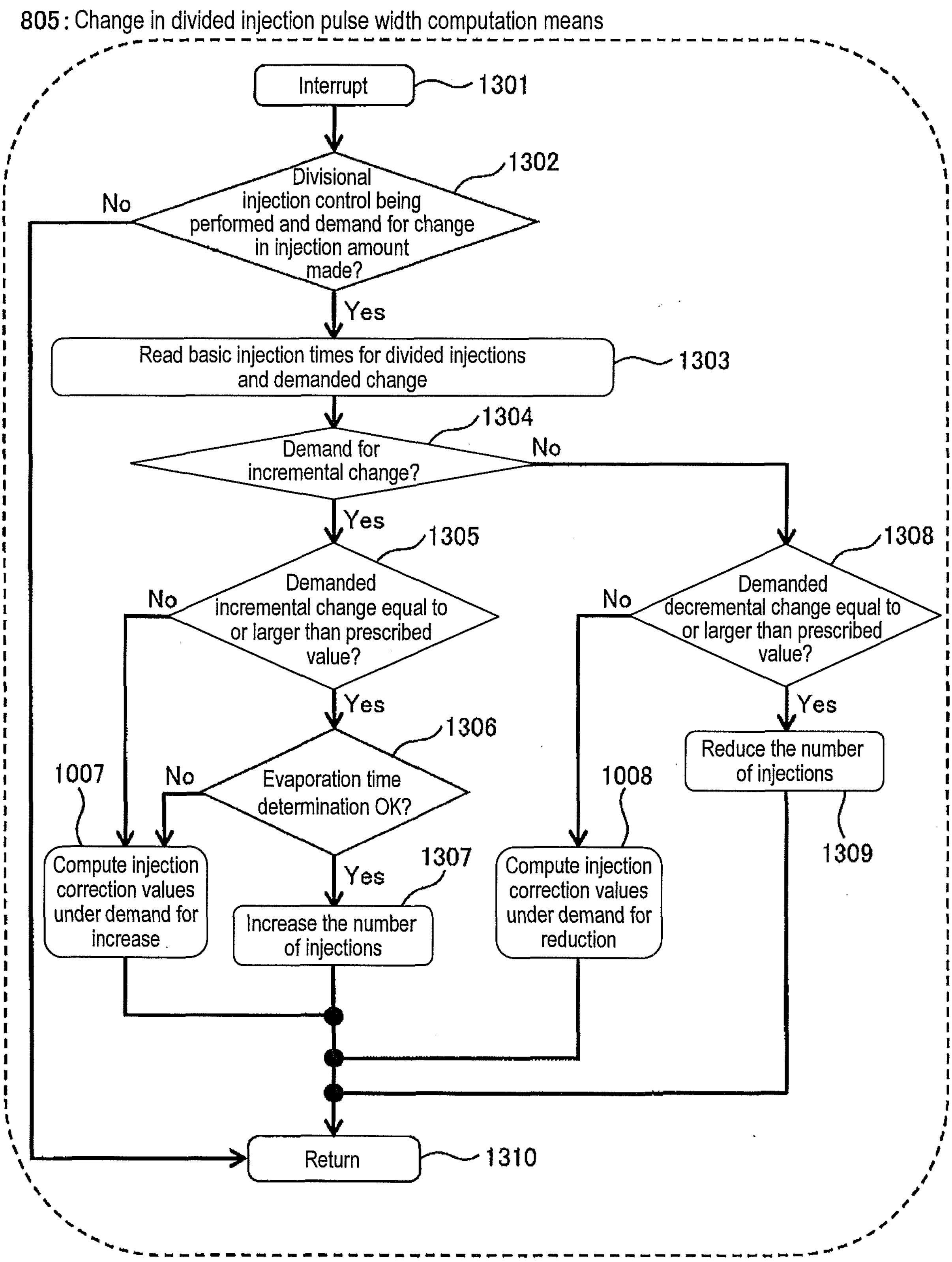
805: Change in divided injection pulse width computation means
Interrupt
1301
Divisional injection control being performed and demand for change in injection amount made?
1302
No
Yes
Read basic injection times for divided injections and demanded change
1303
Demand for incremental change?
1304
No
Yes
Demanded incremental change equal to or larger than prescribed value?
1305
No
Yes
Evaporation time determination OK?
1306
No
Yes
1007
Compute injection correction values under demand for increase
Increase the number of injections
1307
Demanded decremental change equal to or larger than prescribed value?
1308
No
Yes
1008
Compute injection correction values under demand for reduction
Reduce the number of injections
1309
Return
1310

FIG. 14

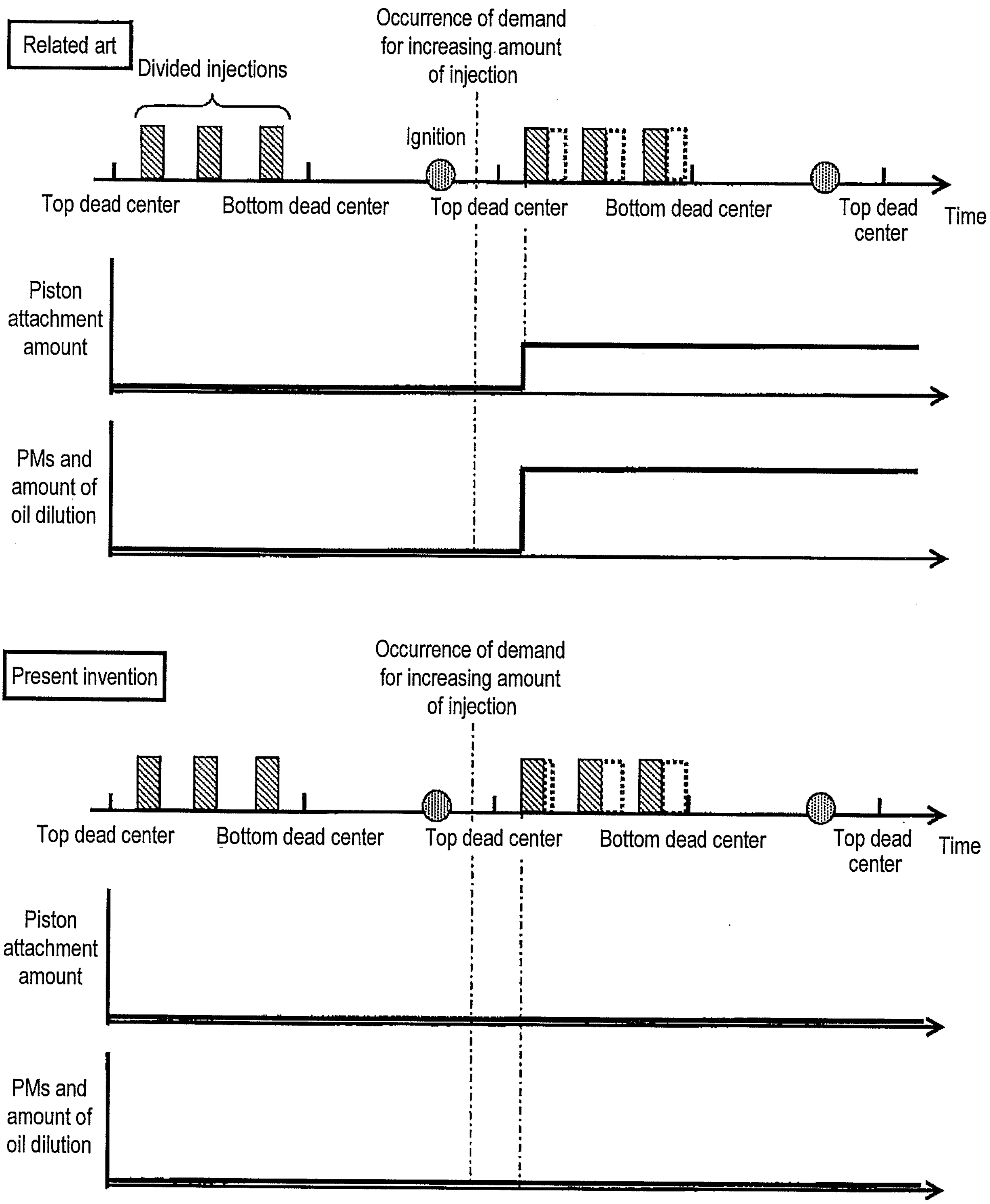
Related art
Divided injections
Occurrence of demand for increasing amount of injection
Ignition
Top dead center
Bottom dead center
Top dead center
Bottom dead center
Top dead center
Time
Piston attachment amount
PMs and amount of oil dilution
Present invention
Occurrence of demand for increasing amount of injection
Top dead center
Bottom dead center
Top dead center
Bottom dead center
Top dead center
Time
Piston attachment amount
PMs and amount of oil dilution

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009191768 A
- DE 19931823 A1
- EP 1035314 A2
- DE 10242226 A1
- EP 0943793 A2
- US 2004040534 A1